(19) Europäisches Patentamt
European Patent Office
Office européen des brevets

(11) Veröffentlichungsnummer: **0 019 298**
**B1**

(12) **EUROPÄISCHE PATENTSCHRIFT**

(45) Veröffentlichungstag der Patentschrift: **16.03.83**

(51) Int. Cl.³: **G 03 C 1/84**

(21) Anmeldenummer: **80102795.4**

(22) Anmeldetag: **20.05.80**

(54) **Photographisches Silberhalogenidmaterial mit einer Filter- oder Lichthofschutzschicht.**

(30) Priorität: **22.05.79 GB 7917693**

(43) Veröffentlichungstag der Anmeldung:
**26.11.80 Patentblatt 80/24**

(45) Bekanntmachung des Hinweises auf die Patenterteilung:
**16.03.83 Patentblatt 83/11**

(84) Benannte Vertragsstaaten:
**BE CH DE FR GB IT LI**

(56) Entgegenhaltungen:
**GB - A - 2 002 916**

(73) Patentinhaber: **CIBA-GEIGY AG**
**Patentabteilung Postfach**
**CH-4002 Basel (CH)**

(72) Erfinder: **Postle, Stephen Roderick**
**Springdale 29 Goodwood Avenue**
**Hutton, Brentwood Essex CM13 1QD (GB)**
Erfinder: **Psaila, Alexander**
**12 Swallow Path**
**Tilekiln, Chelmsford Essex (GB)**

(74) Vertreter: **Berg, Wilhelm, Dr. et al,**
**Dr. Berg, Dipl.-Ing. Stapf, Dipl.-Ing. Schwabe, Dr. Dr. Sandmair Mauerkircherstrasse 45**
**D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 019 298 B1

Photographisches Silberhalogenidmaterial mit einer Filter- oder Lichthofschutzschicht

Die vorliegende Erfindung betrifft photographisches Silberhalogenidmaterial, das entweder eine Filter- oder Lichthofschutzschicht enthält.

In Filterschichten oder Lichthofschutzschichten und insbesondere in Lichthofschutzunterschichten photographischer Materialen verwendete Farbstoffe müssen in der Schicht, in der sie eingearbeitet sind, substantiv und leicht ausbleichbar sein. Im Falle von Lichthofschutzfarbstoffen sollten sie auch die breitest mögliche spektrale Absorption besitzen. Beispielsweise wird gemäss GB—A—2,002,916 A ein Gemisch aus Pyrazolon- und Bispyridonfarbstoffen in Lichthofschutzschichten verwendet.

Es wurde nun gefunden, dass auch die Verwendung einer einzigen Farbstoffklasse in Form einer festen Dispersion zu geeigneten Filter- oder Lichthofschutzschichten führt.

Gegenstand vorliegender Erfindung ist demnach photographisches Silberhalogenidmaterial, welches in mindestens einer Schicht eine feste Dispersion eines wasserunlöslichen Farbstoffs der Formel

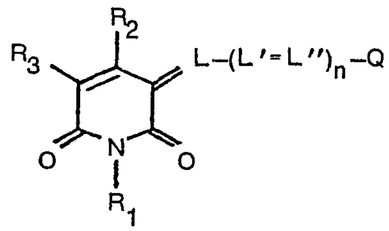

(1)

in einem Bindemittel enthält, worin L, L' und L'' gegebenenfalls substituiertes Methin sind, n 0 oder 1, Q gegebenenfalls substituiertes Phenyl oder ein Benzimidazol-, Benzoxazol-, Benzothiazol-, Benzoselenazol-, Lepidin-, Chinolin- oder Indolring, $R_1$ Wasserstoff, gegebenenfalls substituiertes Alkyl, Aralkyl, Cycloalkyl oder Aryl, ein gegebenenfalls substituierter heterocyclischer Rest oder gegebenenfalls substituiertes Amino, $R_2$ Wasserstoff, Hydroxyl, Amino, —CN, —$COOR^1$, —$CONR^1R^2$, —$COR^1$ oder gegebenenfalls substituiertes Alkyl, Aralkyl, Cycloalkyl oder Aryl, oder ein gegebenenfalls substituierter heterocyclischer Rest und $R_3$ Wasserstoff, —CN, —$COOR^3$, $CONR^3R^4$, —$SO_3H$, —$SO_3^{\ominus}$ oder —$COR^3$ ist, wobei $R^1$, $R^2$, $R^3$ und $R^4$ unabhängig voneinander Wasserstoff oder gegebenenfalls substituiertes Alkyl, Aralkyl, Cycloalkyl oder Aryl oder einen gegebenenfalls substituierten heterocyclischen Rest bedeuten.

Die im folgenden verwendeten Definitionen Niederalkyl und Niederalkoxy bezeichnen Alkyl- und Alkoxyreste mit 1 bis 6 Kohlenstoffatomen.

Die gegebenenfalls substituierten Alkylreste $R_1$ und $R_2$ sowie $R^1$, $R^2$, $R^3$ und $R^4$ sind vorzugsweise Niederalkyl oder substituiertes Niederalkyl, wie z.B. Methyl, Aethyl, n-Propyl, n-Butyl, sowie auch n-Octyl, n-Decyl und n-Dodecyl, Hydroxyniederalkyl wie z.B. β-Hydroxyäthyl, Niederalkoxyalkyl wie z.B. β-(Methoxy- oder Aethoxy)-äthyl und γ-Methoxypropyl, Cyanmethyl, Carbamoylmethyl, Carbäthoxymethyl, Acylmethyl oder Acyläthyl, wie z.B. Acetylmethyl, und β-Aminoäthyl.

Sind $R_1$, $R_2$, $R^1$, $R^2$, $R^3$ und $R^4$ Aralkyl, so sind Benzyl und β-Phenyläthyl bevorzugt.

Bedeuten $R_1$, $R_2$, $R^1$, $R^2$, $R^3$ und $R^4$ Cycloalkyl, so ist Cyclohexyl bevorzugt. Stehen $R_1$, $R_2$, $R^1$, $R^2$, $R^3$ und $R^4$ für gegebenenfalls substituiertes Aryl, so ist gegebenenfalls substituiertes Phenyl, insbesondere Tolyl, Chlorphenyl, Methoxyphenyl und Aethoxyphenyl, geeignet. Die durch $R_1$, $R_2$, $R^1$, $R^2$, $R^3$ und $R^4$ dargestellten, gegebenenfalls substituierten heterocyclischen Reste sind vorzugsweise 5- und 6-gliedrige heterocyclische Ringe, wie z.B. 2-Pyridyl, 2-Thiazolyl, 1-Piperidinyl und 1-Morpholinyl, welche gegebenenfalls weiter substituiert sind.

Q ist Phenyl, welches vorzugsweise mit Halogen, Hydroxyl oder insbesondere mit Diniederalkylamino wie z.B. Dimethylamino substituiert ist. Beispiele für ein heterocyclisches Ringsystem Q sind Benzimidazol, Benzoxazol, Benzothiazol, Benzoselenazol, Lepidin, Chinolin und insbesondere Indol, welche gegebenenfalls durch Hydroxyl, Halogen, Cyan, Nitro und Niederalkyl substituiert sein können.

Farbstoffe der Formel (1) werden durch Sulfit in photographischen Verarbeitungslösungen, insbesondere in photographischen Silberhalogenidentwicklerlösungen, rasch gebleicht.

Die am leichtesten bleichbaren Farbstoffe der Formel (1) sind jedoch solche, worin L, L' und L'' Methin (—CH= oder =CH—) sind, $R^1$ Wasserstoff, Alkyl mit 1 bis 4 Kohlenstoffatomen, Hydroxyalkyl mit 2 bis 4 Kohlenstoffatomen oder verestertes Hydroxyalkyl, z.B. der Formel

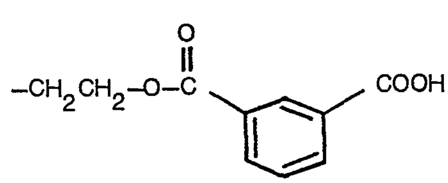

oder Aminoalkyl mit 2 bis 4 Kohlenstoffatomen, $R_3$ eine elektronegative Gruppe wie —CN, —$COOR^3$, —$CONR^3R^4$ oder —$COR^3$, wobei $R^3$ und $R^4$ Wasserstoff oder Alkyl mit 1 bis 4 Kohlenstoffatomen bedeuten, und $R_2$ gegebenenfalls substituiertes Niederalkyl, vorzugsweise Alkyl mit 1 bis 4 Kohlenstoffatomen, ist. Besonders bevorzugt ist $R_3$ in der Bedeutung von —CN.

Vorzugsweise soll der Farbstoff der Formel (1) ferner eine wasserlöslich machende Gruppe enthalten, d.h. eine Gruppe, welche die Ausbildung von Wasserstoffbindungen fördert. Die Gegenwart einer solchen Gruppe erleichtert das Auswaschen der Farbstoffreste aus den photographischen Materialien nach der Zerstörung des Farbstoffs durch die Bleichung. Es ist jedoch wichtig, dass der Farbstoff trotz der wasserlöslich machenden Gruppe wasserunlöslich ist. Wasserlöslich machende Gruppen sind beispielsweise Amino-, Hydroxyl- und Carboxylgruppen.

Die Farbstoffe der Formel (1) lassen sich dadurch herstellen, dass man ein Hydroxypyridon der Formel

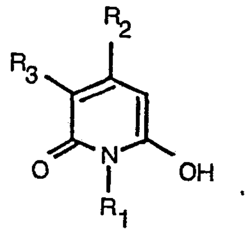

(2)

worin $R_1$, $R_2$ und $R_3$ die oben angegebenen Bedeutungen haben, mit einem Aldehyd der Formel O=CH—(L'=L'')—Q

worin L', L'' und Q die oben angegebenen Bedeutungen haben, in einem geeigneten Lösungsmittel umsetzt. Als Lösungsmittel eignen sich beispielsweise Methanol, Essigsäure und 2-Methoxyäthanol. Manchmal ist es vorteilhaft, die Umsetzung bei erhöhten Temperaturen durchzuführen.

Die Hydroxypyridone der Formel (2) sind nach verschiedenen Methoden herstellbar, z.B. nach "Heterocyclic Compounds-Pyridine and its derivatives — Part 3, herausgegeben von Klinsberg, Verlag Interscience Publishers, 1962 und nach der britischen Patentschrift Nr. 1 256 095.

Als spezielle Beispiele für Hydroxypyridone seien genannt: 2,6-Dihydroxy-3-cyan-4-methylpyridin, 1-(Methyl oder Aethyl)-3-cyan-6-hydroxypyridon-2, 1-(β-Hydroxyäthyl oder γ-Methoxypropyl)-3-cyan-4-(methyl,phenyl oder äthyl)-6-hydroxypyridon-2, 1-(Phenyl oder Anisyl)-3-cyan-4-(methyl oder phenyl)-6-hydroxypyridon-2, 1-Phenyl-3-(carbonamido oder carbäthoxy)-4-(methyl oder phenyl)-6-hydroxypyridon-2, 2,6-Dihydroxy-3-(carbäthoxy oder carbodiäthylamido)-4-methylpyridin, 2,6-Dihydroxy-3-(carbonamido oder carbäthoxy)-pyridin, 2,6-Dihydroxy-2-carbonamido-4-phenylpyridin, 2,6-Dihydroxy-3-cyan-4-carbonamidopyridin, 2,6-Dihydroxy-3-cyan-4-(carbomethoxy oder carbäthoxy)-pyridin, Aethyl-2,6-dihydroxy-3-cyanpyridyl-(4)-acetat, 2,6-Dihydroxy-3-cyanpyridyl-(4)-acetamid, 2,6-Dihydroxy-3,4-di-(carbäthoxy)-pyridin, 2,6-Dihydroxy-3-carbonamido-4-carbäthoxypyridin, Aethyl-2,6-dihydroxy-isonicotinat, 2,6-Dihydroxy-isonicotinamid, 2,6-Dihydroxyisonicotinsäurediäthylamid und 2,6-Dihydroxy-3-cyan-4-äthoxycarbonyl-1-methylpyridin.

Ein wesentliches Merkmal des erfindungsgemässen photographischen Materials besteht darin, dass die Farbstoffe der Formel (1) als feste Dispersion in photographischen Materialien vorliegen. Versuche, die Farbstoffe auf andere Weise, zum Beispiel durch Giessen von Farbstofflösungen (in organischen Lösungsmitteln), in gegossene Schichten einzuarbeiten, führen wegen der sehr geringen Löslichkeit dieser Farbstoffe in polaren Lösungsmitteln wie Methanol, Aethanol, Aceton, Aethylacetat, Dichlormethan und Oelen wie Trikresylphosphat nicht zum Erfolg. Derartige Güsse weisen eine niedrige Dichte auf und decken einen erheblich engeren Spektralbereich. Wegen der unkontrollierbaren Ausfällung des Farbstoffs in der Schicht ist auch die Qualität dieser Güsse stets schlecht. Die Gegenwart von Oel erhöht die Dicke der Schicht und vermindert die Bleichbarkeit des Farbstoffs.

Wenn jedoch die Farbstoffe der Formel (1) in gegossenen Schichten als feste Dispersionen vorliegen, weisen sie einen grösseren Bereich nützlicher spektraler Absorptionen auf, als wenn sie auf andere Weise gegossen sind. Dieser Sachverhalt ist in Abb. 1 dargestellt.

Als Bindemittel für die Farbstoffe der Formel (1) wird Gelatine bevorzugt, insbesondere wenn die die Farbstoffe enthaltende Schicht eine Filter- oder Lichthofschutzunterschicht ist.

Eine feste Dispersion der Farbstoffe der Formel (1) lässt sich dadurch herstellen, dass man die Farbstoffe in situ in Gelatine bildet und dabei die Ausfällung des Farbstoffs bei seiner Bildung sorgfältig steuert. Die den festen Farbstoff enthaltende Gelatine kann dann als Schicht in photographischen Materialien gegossen werden.

Ferner kann eine feste Dispersion des Farbstoffs in einem Bindemittel nach einer Mahlmethode hergestellt werden, wobei eine wässrige Aufschlämmung des Farbstoffs zusammen mit einem nichtionogenen und/oder einem anionen-aktiven Netzmittel sowie Wasser in eine mit Mahlkörpern von 0,7 bis 1,00 mm Durchmesser beschickte Kolloidmühle gegeben wird. Man lässt die Mühle solange laufen, bis die durchschnittliche Teilchengrösse des Farbstoffs einem Durchmesser von weniger als 1 µm entspricht. Bevorzugt ist eine mittlere Teilchengrösse von 0,4 bis 0,5 µm.

Der so hergestellten wässrigen Farbstoffdispersion wird dann eine Lösung des Bindemittels (üblicherweise Gelatine in Wasser) zusammen mit einem Netzmittel zugegeben. Danach lässt sich die erforderliche Konzentration der Dispersion in bezug auf Farbstoff- und Bindemittelkonzentration einstellen.

Die Verwendung der Farbstoffe der Formel (1) als feste Dispersionen ermöglicht es, neutrale Farbunterschichten, welche praktisch den gesamten aktinischen Lichtbereich überdecken, unter Verwendung von nur ein oder zwei Farbstoffen herzustellen. Feste Dispersionen von Farbstoffen der Formel (1) lassen sich ohne jegliche Destabilisierung der Dispersion bzw. Beeinträchtigung der Bleichbarkeit oder Substantivität der Farbstoffe miteinander mischen.

Die nachfolgenden Herstellungsvorschriften erläutern die Herstellung von Farbstoffen der Formel (1).

Herstellungsvorschrift 1

Farbstoff der Formel

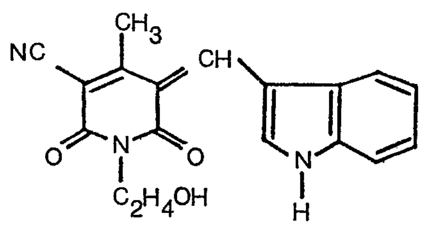

(101)

Man rührt 3-Cyan-1-(2'-hydroxyäthyl)-6-hydroxy-4-methylpyridon-2 (19,4 g) und Indol-3-carboxaldehyd (14,5 g) in Methanol (100 ml) 2 Stunden bei 20°C. Das Gemisch wird mit Aether (400 ml) verdünnt und der ausgefällte Farbstoff mit Aether (200 ml) gewaschen und im Vakuum getrocknet (29,9 g). $\lambda$max ($CH_3OH$) = 475 nm.

Herstellungsvorschrift 2

Farbstoff der Formel

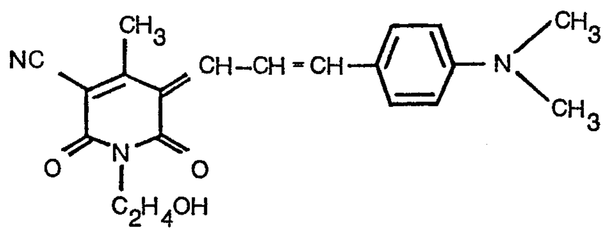

(102)

Man verfährt wie in Herstellungsvorschrift 1, jedoch unter Verwendung von 4-Dimethylaminozimtaldehyd (17,5 g) sowie 2-Methoxyäthanol (200 ml) als Lösungsmittel. Farbstoffausbeute beträgt 28,8 g. $\lambda$max ($CH_3OH$) = 618 nm.

Herstellungsvorschrift 3

Farbstoff der Formel

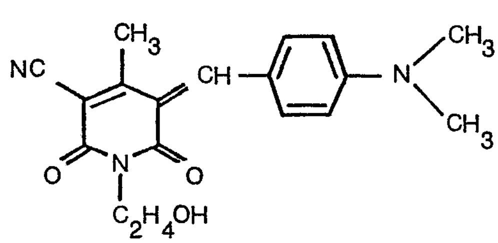

(103)

Man verfährt wie in Herstellungsvorschrift 1, jedoch unter Verwendung von 4-Dimethylaminobenzaldehyd (14,9 g). Man lässt die Umsetzung 30 Minuten lang unter Rückfluss ablaufen. Farbstoffausbeute beträgt 30,9 g. $\lambda$max ($CH_3OH$) = 530 nm.

Herstellungsvorschrift 4

Farbstoff der Formel

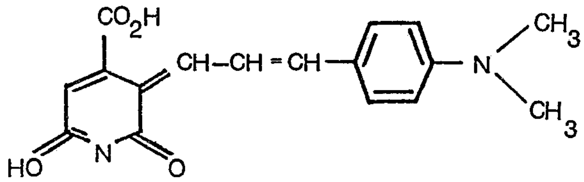

(104)

Man verfährt wie in Herstellungsvorschrift 2, jedoch unter Verwendung von Citrazinsäure (15,5 g). Man lässt die Umsetzung 30 Minuten lang unter Rückfluss ablaufen. Farbstoffausbeute beträgt 13,2 g. $\lambda max (CH_3OH) = 575$ nm.

Herstellungsvorschrift 5

Farbstoff der Formel

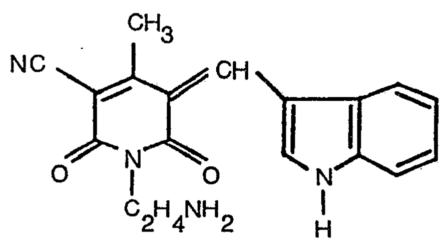

(105)

Man löst 1-(2-Aminoäthyl)-3-cyan-6-hydroxy-4-methylpyridon-2 (19,3 g) und Indol-3-carboxaldehyd (14,5 g) in 200 ml Essigsäure und kocht 30 Minuten unter Rückfluss. Das Gemisch wird mit 400 ml Aether verdünnt und der ausgefällte Farbstoff mit Methanol und danach mit Aether gewaschen und im Vakuum getrocknet. Ausbeute 18,4 g. $\lambda max (CH_3OH) = 474$ nm.

Herstellungsvorschrift 6

Farbstoff der Formel

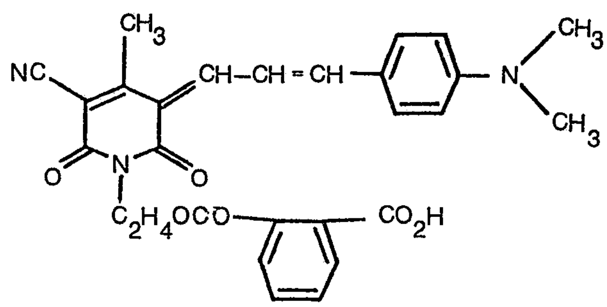

(106)

Man kocht 1-[2′-(2″-Carboxybenzoyl)-oxyäthyl]-3-cyan-6-hydroxy-4-methylpyridon-2 (3,07 g) und 4-Dimethylaminozimtaldehyd (1,57 g) in 2-Methoxyäthanol (18 ml) 30 Minuten unter Rückfluss. Nach Abkühlen wird die Lösung mit Aether (40 ml) verdünnt und der ausgefällte Farbstoff mit Wasser (100 ml) gewaschen, dann mit Aethanol (10 ml) aufgekocht, abfiltriert und mit Aethanol (50 ml) gewaschen, wobei man den reinen Farbstoff (2,40 g) erhält. $\lambda max (CH_3OH) = 625$ nm.

Anwendungsbeispiel

Unter Verwendung von 1,0 g einer 10%igen Lösung eines nichtionogenen Netzmittels (Addukt aus Octylphenol und 10 Mol Aethylenoxyd) und 1,0 g einer 10%igen Lösung eines anionen-aktiven Netzmittels (Natriumsalz des sulfonierten Addukts aus Octyl-methylphenol und 8 Mol Aethylenoxyd) bereitet man mit 10 g des Farbstoffs der Formel (101) eine wässrige Aufschlämmung. Die in der Aufschlämmung vorliegende Gesamtmenge Wasser beträgt 80 g. Man giesst die Aufschlämmung in eine mit Mahlkörpern von 0,75 bis 1,00 mm beschickte Kolloidmühle. Die Aufschlämmung wird eine Stunde bei 3000 U.p.m. gemahlen, wonach sie eine Teilchengrössenverteilung von weniger als 1 μm Durchmesser besitzt.

Die wässrige Dispersion des Farbstoffs wird dann der Mühle entnommen und mit 2,5 kg 4%iger wässriger Gelatinelösung mit einem pH-Wert von 6,0 versetzt. Es wird dabei eine entkationsierte Gelatine verwendet. Die Gelatinelösung gibt man langsam unter Rühren zur wässrigen Dispersion des Farbstoffs. Deren Konzentration wird so eingestellt, dass sich beim Giessen der wässrigen Gelatine/Farbstoffdispersion als Schicht in panchromatisch sensibilisiertem Silberhalogenidemulsionsmaterial eine Dichte von 1,0 bei $\lambda$max ergibt, wenn das Giessgewicht 20 mg/dm$^2$ Gelatine beträgt, was einem Guss von 1,2 mg/dm$^2$ Farbstoff entspricht.

Diese Farbstoffdispersion in wässriger Gelatinelösung wird auf einen 150 $\mu$m dicken, durchsichtigen Celluloseacetatträger mit einem Giessgewicht von 20 mg/dm$^2$ gegossen. Dieser Guss wird dann getrocknet und darüber eine panchromatisch sensibilisierte Silberjodidbromidemulsion mit einem Giessgewicht von 50 mg/dm$^2$ Silber und 80 mg/dm$^2$ Gelatine gegossen. Diese Schicht wird getrocknet. Darüber giesst man eine Gelatinelösung, die 8 cm$^3$ 6%ige Formaldehydhärterlösung auf 100 g Gelatine enthält, um eine Schutz- oder Deckschicht mit einem Giessgewicht von 12 mg/dm$^2$ Gelatine zu schaffen. Die gefärbte Gelatineschicht stellt somit eine Lichthofschutzunterschicht dar.

Bei diesen Giessvorgängen ist keine Auslaugung der gefärbten Unterschicht festzustellen.

Zu Vergleichszwecken wird ähnliches photographisches Material ohne Farbstoff in der Gelatineunterschicht hergestellt.

Streifen aus beiden Sätzen photographischen Materials werden hinter einem Keil bildweise belichtet und wie folgt verarbeitet:

Silberhalogenidentwickerlösung

6 1/2 Minuten bei 20°C

| | | |
|---|---|---|
| Lösung: | p-N-Methylaminophenolsulfat | 2 g |
| | Wasserfreies Natriumsulfit | 100 g |
| | Hydrochinon | 5 g |
| | Borax | 2 g |
| | Wasser auf | 1 Liter |

Wässerungsbad

1/2 Minute bei 20°C

Silberhalogenidfixierbad

10 Minuten bei 20°C

| | | |
|---|---|---|
| Lösung: | Natriumthiosulfat | 300 g |
| | Wasserfreies Natriumsulfit | 15 g |
| | Eisessig | 10 g |
| | Borsäure | 7,5 g |
| | Kalialaun | 15 g |
| | Wasser auf | 1 Liter |

Schlusswässerungsbad

15 Minuten bei 20°C.

Nach Beendigung der Verarbeitung sind keine Anzeichen von Farbstoff in der Lichthofschutzunterschicht sichtbar. Der Farbstoff ist völlig und irreversibel in der Silberhalogenidentwicklerlösung zerstört worden und es ist keine Verfärbung irgendeiner der Verarbeitungslösungen sichtbar.

Werden die sensitiometrischen Eigenschaften der beiden Sätze photographischer Streifen miteinander verglichen, so sind die Werte für Empfindlichkeit, Kontrast und $D_{max}$ sehr ähnlich. Jedoch ist ein deutlicher Anstieg der Schärfe des fertigen photographischen Bildes bei den Streifen festzustellen, die vor der Verarbeitung eine feste Dispersion des Farbstoffs der Formel (101) enthaltende Lichthofschutzunterschicht enthalten haben.

Es werden fünf Sätze photographischer Streifen hergestellt, die jeweils Farbstoffe der Formeln

(102) bis (106) in der Lichthofschutzunterschicht enthalten. Diese fünf Streifensätze werden mit Streifen ohne Unterschicht, jedoch mit sonst ähnlichen photographischen Eigenschaften verglichen. Bei allen fünf Streifensätzen mit Lichthofschutzunterschicht wird der Farbstoff völlig und irreversibel ausgebleicht. Die Beurteilung der sensitometrischen Eigenschaften dieser Streifen nach der Verarbeitung ergibt, dass sie ähnlich sind und auch den Eigenschaften des Materials ohne Lichthofschutzunterschicht entsprechen. Jedoch ist die photographische Abbildung der Materialien mit gefärbter Lichthofschutzunterschicht deutlich schärfer.

Um zu zeigen, dass alle sechs Farbstoffe völlig substantiv in der Gelatineunterschicht sind, stellt man, wie eben beschrieben, Gelatinedispersionen der sechs Farbstoffe her und giesst diese als Schichten auf einen klaren Cellulosetriacetatträger, wobei das Gelatinegiessgewicht 20 mg/dm$^2$ und das Farbstoffgiessgewicht 1—2 mg/dm$^2$ beträgt. Bei diesem Versuch wird kein Härter zugesetzt. Man misst jeweils die spektrale Absorption dieser Streifen. Alle sechs Streifen werden 30 Minuten bei 25°C in getrennte Wasserbäder eingetaucht und nach Ablauf dieser Zeit herausgenommen und getrocknet. In keinem der sechs Bäder beobachtet man eine Färbung des Wassers. Danach wird die spektrale Absorption der Streifen jeweils erneut gemessen. Es zeigt sich, dass diese in jedem Fall unverändert ist.

Um die Verbesserung der spektralen Absorption aufzuzeigen, werden die Spektren photographischen Materials, das eine feste Dispersion des Farbstoffs der Formel (101) enthält, und eines Materials, welches denselben Farbstoff in Acetonlösung enthält, verglichen. Wird der Farbstoff der Formel (101) in Aceton gelöst, so zeigt das Material eine enge spektrale Absorption zwischen etwa 425 und 475 nm. Wird jedoch der Farbstoff in der Lichthofschutzschicht als feste Dispersion verwendet, so besitzt das Material eine sehr breite spektrale Absorptionsbande von 370 bis 650 nm, die sich bis in den infraroten Bereich erstreckt.

Zu Vergleichszwecken wird nun photographisches Material mit einer die feste Dispersion enthaltenden Lichthofschutzschicht und photographisches Material ohne den Farbstoff in der Gelatineunterschicht hergestellt.

Die sensitometrischen Eigenschaften der beiden verarbeiteten photographischen Materialien sind ähnlich, doch ist die Schärfe des Materials, in dem der Farbstoff der Formel (101) als feste Dispersion in der Lichthofschutzschicht enthalten war, deutlich verbessert.

Bei Verwendung der Farbstoffe der Formeln (102) bis (106) erhält man vergleichbare Ergebnisse.

**Patentansprüche**

1. Photographisches Silberhalogenidmaterial, dadurch gekennzeichnet, dass es in mindestens einer Schicht eine feste Dispersion eines wasserunlöslichen Farbstoffs der Formel

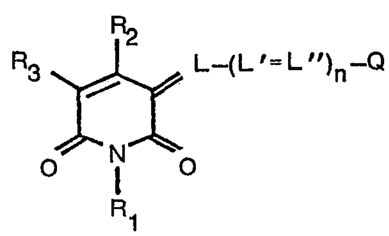

(1)

in einem Bindemittel enthält, worin L, L' und L'' gegebenenfalls substituiertes Methin sind, n 0 oder 1, Q gegebenenfalls substituiertes Phenyl oder ein Benzimidazol-, Benzoxazol-, Benzothiazol-, Benzoselenazol-, Lepidin-, Chinolin- oder Indolring, $R_1$ Wasserstoff, gegebenenfalls substituiertes Alkyl, Aralkyl, Cycloalkyl oder Aryl, ein gegebenenfalls substituierter heterocyclischer Rest oder gegebenenfalls substituierter heterocyclischer Rest oder gegebenenfalls substituiertes Amino, $R_2$ Wasserstoff, Hydroxyl, Amino, —CN, —COOR$^1$, —CONR$^1$R$^2$, —COR$^1$ oder gegebenenfalls substituiertes Alkyl, Aralkyl, Cycloalkyl oder Aryl oder ein gegebenenfalls substituierter heterocyclischer Rest und $R_3$ Wasserstoff oder —CN, —COOR$^3$, —CONR$^3$R$^4$, —$SO_3$H, —$SO_3^{\ominus}$ oder —COR$^3$ ist, wobei R$^1$, R$^2$, R$^3$ und R$^4$ unabhängig voneinander Wasserstoff oder gegebenenfalls substituiertes Alkyl, Aralkyl, Cycloalkyl oder Aryl oder einen gegebenenfalls substituierten heterocyclischen Rest bedeuten.

2. Photographisches Material nach Anspruch 1, dadurch gekennzeichnet, dass L, L' und L'' Methin sind, $R_1$ Wasserstoff, Alkyl mit 1 bis 4 Kohlenstoffatomen, Hydroxyalkyl mit 2 bis 4 Kohlenstoffatomen, verestertes Hydroxyalkyl oder Aminoalkyl mit 2 bis 4 Kohlenstoffatomen, $R_3$ —CN, —COOR$^3$, —CONR$^3$R$^4$ oder —COR$^3$, wobei R$^3$ und R$^4$ Wasserstoff oder Alkyl mit 1 bis 4 Kohlenstoffatomen bedeuten, und $R_2$ gegebenenfalls substituiertes Alkyl mit 1 bis 4 Kohlenstoffatomen ist.

3. Photographisches Material nach einem der Ansprüche 1 oder 2, dadurch gekennzeichnet, dass der wasserunlösliche Farbstoff der Formel (1) eine wasserlöslich machende Gruppe enthält.

4. Photographisches Material nach Anspruch 3, dadurch gekennzeichnet, dass der wasserunlösliche Farbstoff der Formel (1) als wasserlöslich machende Gruppe eine Amino-, Hydroxyl- oder Carboxylgruppe enthält.

5. Photographisches Material nach einem der Ansprüche 1 bis 4, dadurch gekennzeichnet, dass als Bindemittel Gelatine vorliegt.

6. Photographisches Material nach einem der Ansprüche 1 bis 5, dadurch gekennzeichnet, dass die die feste Farbstoffdispersion enthaltende Schicht im photographischen Material eine Filter- oder Lichthofschutzunterschicht ist.

**Claims**

1. Photographic silver halide material which comprises in at least one layer a solid dispersion of a water-insoluble dye of the formula I

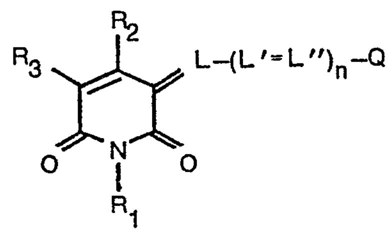

I

wherein each of L, L′ and L″ are an optionally substituted methine group, n is 0 or 1, Q is an optionally substituted phenyl group or a benzimidazole, benzoxazole, benzothiazole, benzoselenazole, lepidine, quinoline or indole ring, $R_1$ represents a hydrogen atom or an optionally substituted alkyl, aralkyl, cycloalkyl, aryl or heterocyclic radical or an optionally substituted amino group, $R_2$ represents a hydrogen atom or a hydroxy, amino, —CN, —$COOR^1$, —$CONR^1R^2$ or —$COR^1$ group or an optionally substituted alkyl, aralkyl, cycloalkyl, aryl or heterocyclic radical, and $R_3$ represents a —CN, —$COOR^3$, —$CONR^3R^4$, —$SO_3H$, —$SO_3^{\ominus}$ or —$COR_3$ group, where $R^1$, $R^2$, $R^3$ and $R^4$ each independently represent a hydrogen atom or an optionally substituted alkyl, aralkyl, cycloalkyl, aryl or heterocyclic radical, in a binder.

2. Photographic material according to claim 1, wherein L, L′ and L″ are methine, $R_1$ is hydrogen, alkyl of 1 to 4 carbon atoms, hydroxyalkyl of 2 to 4 carbon atoms, esterified hydroxyalkyl or aminoalkyl of 2 to 4 carbon atoms, $R_3$ is —CN, —$COOR^3$, —$CONR^3R^4$ or —$COR^3$, in which $R^3$ and $R^4$ are hydrogen or alkyl of 1 to 4 carbon atoms, and $R_2$ is optionally substituted alkyl of 1 to 4 carbon atoms.

3. Photographic material according to either of claims 1 or 2, wherein the water-insoluble dye of the formula (1) contains a water-solubilising group.

4. Photographic material according to claim 3, wherein the water-insoluble dye of the formula (1) contains an amino, hydroxyl or carboxyl group as water-solubilising group.

5. Photographic material according to any one of claims 1 to 4, wherein the bonder is gelatin.

6. Photographic material according to any one of claims 1 to 5, wherein the layer containing the solid dyestuff dispersion in the photographic material is a filter underlayer or an anti-halation underlayer.

**Revendications**

1. Matière photographique à base d'halogénure d'argent, caractérisée par le fait qu'elle contient dans un liant, dans au moins une couche, une dispersion solide d'un colorant insoluble dans l'eau ayant la formule

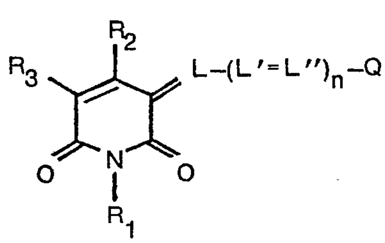

(1)

dans laquelle L, L′ et L″ sont des groupes méthiniques éventuellement substitués; n est 0 ou 1; Q est un groupe phényle éventuellement substitué ou bien un noyau benzimidazole, benzoxazole, benzothiazole, benzosélénazole, lépidine, quinoline ou indole; $R_1$ est de l'hydrogène, un groupe alkyle, aralkyle, cycloalkyle ou aryle, éventuellement substitué, un reste hétérocyclique éventuellement substitué ou un groupe amino éventuellement substitué; $R_2$ est de l'hydrogène, un groupe hydroxyle, amino, —CN, —$COOR^1$, —$CONR^1$, —$CONR^1R^2$, —$COR^1$ ou bien un groupe alkyle, aralkyle, cycloalkyle ou aryle, éventuellement substitué, ou bien un reste hétérocyclique éventuellement substitué, et $R_3$ est de

l'hydrogène ou un groupe —CN, —$COOR^3$, —$CONR^3R^4$, —$SO_3H$, —$SO_3^\ominus$ ou —$COR^3$, $R^1$, $R^2$, $R^3$ et $R^4$ indépendamment les uns des autres étant de l'hydrogène ou des groupes alkyle, aralkyle, cycloalkyle ou aryle, éventuellement substitués, ou bien des restes hétérocycliques éventuellement substitués.

2. Matière photographique selon la revendication 1, caractérisée par le fait que L, L' et L'' sont des groupes méthiniques; $R_1$ est de l'hydrogène, un groupe alkyle avec 1 à 4 atomes de carbone, hydroxyalkyle avec 2 à 4 atomes de carbone, hydroxyalkyle estérifié ou aminoalkyle avec 2 à 4 atomes de carbone; $R_3$ est un groupe —CN, —$COOR^3$, —$CONR^3R^4$ ou —$COR^3$, $R^3$ et $R^4$ étant de l'hydrogène ou des groupes alkyle ayant 1 à 4 atomes de carbone, et $R^2$ est un groupe alkyle ayant 1 à 4 atomes de carbone éventuellement substitué.

3. Matière photographique selon l'une des revendications 1 et 2, caractérisée par le fait que le colorant insoluble dans l'eau de formule (1) contient un groupe aquasolubilisant.

4. Matière photographique selon la revendication 3, caractérisée par le fait que le colorant insoluble dans l'eau de formule (1) contient comme groupe aquasolubilisant un groupe amino, hydroxyle, carboxyle.

5. Matière photographique selon l'une des revendications 1 à 4, caractérisée par le fait que la gélatine est présente comme liant.

6. Matière photographique selon l'une des revendications 1 à 5, caractérisée par le fait que la couche contenant la dispersion solide de colorant se trouvant dans la matière photographique est une couche inférieure filtrante ou une couche inférieure antihalo.

FIG.1

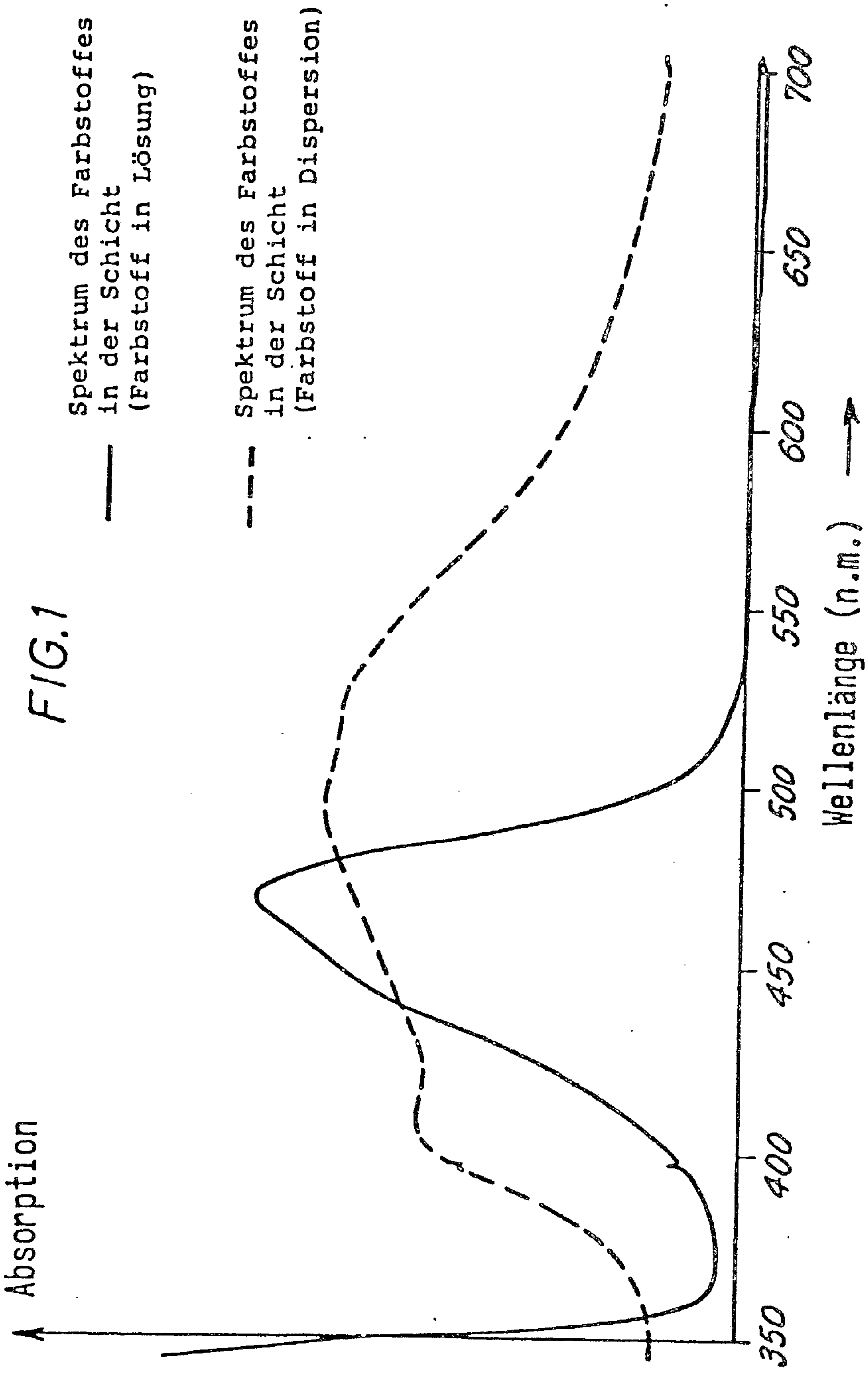

Absorption
Spektrum des Farbstoffes in der Schicht (Farbstoff in Lösung)
Spektrum des Farbstoffes in der Schicht (Farbstoff in Dispersion)
350
400
450
500
550
600
650
700
Wellenlänge (n.m.)